# EUROPÄISCHE PATENTSCHRIFT

(11) **EP 0 941 661 B1**
(45) Veröffentlichungstag und Bekanntmachung des Hinweises auf die Patenterteilung: **02.05.2002**
(21) Anmeldenummer: 99102650.1
(22) Anmeldetag: 12.02.1999
(51) Int. Cl.: A21B 1/26

(54) **Backofen**
Cooking oven
Four de cuisson

(30) Priorität: 09.03.1998 DE 19809980
(43) Veröffentlichungstag der Anmeldung: 15.09.1999
(73) Patentinhaber: Werner & Pfleiderer Lebensmitteltechnik GmbH, 91550 Dinkelsbühl (DE)
(72) Erfinder: Gebhardt, Ralf, 91550 Dinkelsbühl (DE); Dannenhauer, Bernd, 91550 Dinkelsbühl (DE); Blümel, Frank, 91614 Mönschroth (DE)
(74) Vertreter: Rau, Manfred, Dr. Dipl.-Ing.

(56) Entgegenhaltungen:
- DE-A- 3 508 747
- US-A- 5 845 631

## Beschreibung

Die Erfindung betrifft einen Backofen nach dem Oberbegriff des Anspruches 1.

Ein derartiger, aus der US-PS 5,617,839 bekannter Backofen weist einen Wärmetauscher auf, der im Kreuz-Gleichstrom betrieben wird. Hierzu ist der Brennkammer ein Rauchgas-Zuführkanal nachgeordnet, aus dem parallel zur Brennkammer und quer zur Strömung der Umluft verlaufende Wärmetauscherrohre ausmünden. Diese sind mit einem Umlenk-Kasten verbunden, aus dem wiederum ein zweites Bündel Wärmeübertragungsrohre ausmündet, die in einen Rauchgas-Abführkanal einmünden. An diesen ist wiederum ein Rauchgasrohr angeschlossen, das zu einem Kamin führt. Die Wärmeübertragungswirkung läßt zu wünschen übrig. Es treten erhebliche Druckverluste durch die Mehrfach-Umlenkungen auf. Durch die große Zahl von Wärmeübertragungsrohren und die dadurch bedingten Schweiß-Verbindungsstellen ist die Herstellung aufwendig und außerdem die Gefahr von Schweißnahtbrüchen groß, zumal der gesamte Wärmetauscher hinsichtlich der wärmedehnungsbedingten Spannungen problematisch ist.

Der Erfindung liegt die Aufgabe zugrunde, einen Backofen der gattungsgemäßen Art so auszugestalten, daß der Wärmetauscher besonders einfach herstellbar ist, eine gute Wärmeübertragung gewährleistet und nicht störanfällig ist.

Diese Aufgabe wird erfindungsgemäß durch die Merkmale im Kennzeichnungsteil des Anspruches 1 gelöst. Dadurch, daß die Wärmeübertragungsrohre schlangenförmig und besonders bevorzugt S-förmig ausgestaltet sind, sind sie in sich federnd und können daher Wärmeausdehnungsspannungen aufnehmen. Dadurch, daß nur ein Rauchgas-Zuführkanal und nur ein Rauchgas-Abführkanal ohne zwischengeschaltete Umlenkkästen vorgesehen sind, werden die Druckverluste besonders klein und auch die Zahl der Verbindungsstellen zwischen den Wärmeübertragungsrohren und dem Rauchgas-Zuführkanal einerseits und dem Rauchgas-Abführkanal andererseits minimiert.

Durch die Maßnahmen nach Anspruch 2 und insbesondere nach Anspruch 3 wird ermöglicht, daß der erfindungsgemäße Wärmetauscher sich in allen Richtungen ausdehnen kann, ohne daß es zu inneren Spannungen innerhalb des Wärmetauschers kommt, die zu einer Beschädigung führen könnten. Durch die Weiterbildung nach Anspruch 4 wird erreicht, daß Wärmeausdehnungen innerhalb der Wärmeübertragungsrohre und innerhalb des Rauchgas-Zuführkanals bzw. des Rauchgas-Abführkanals in dem Gesamtsystem elastisch aufgefangen werden. Dies gilt insbesondere auch für die Weiterbildung nach Anspruch 5. Durch die Weiterbildung nach Anspruch 6 wird die Herstellung vereinfacht und auch die Betriebssicherheit erhöht.

Die vorteilhafte Weiterbildung nach Anspruch 8 ermöglicht insbesondere die weitere Ausbildung nach Anspruch 9, wodurch verhindert wird, daß nennenswerte Querschnittsänderungen im Wärmetauscher mit den dadurch bewirkten Druckverlusten auftreten.

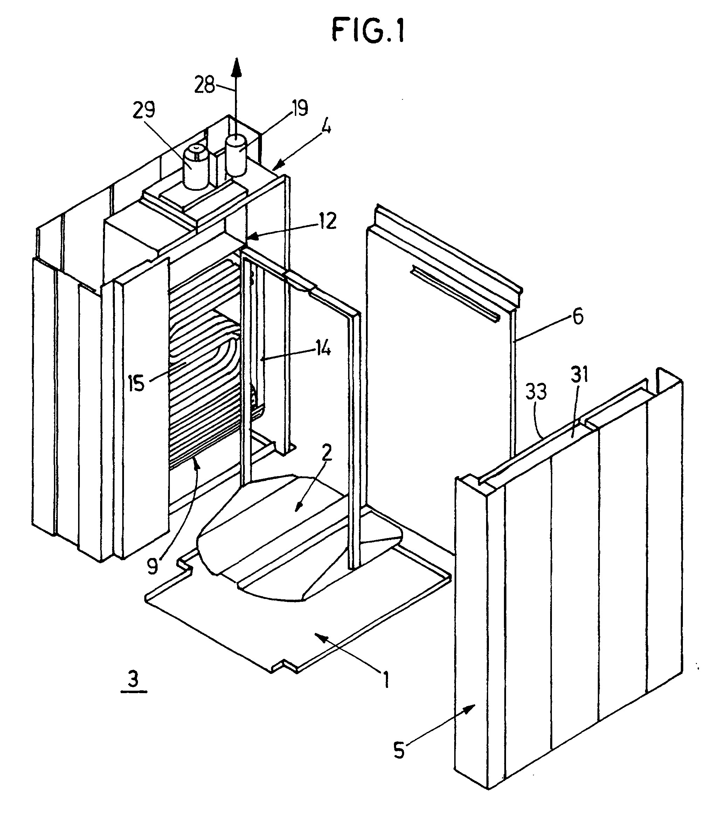

Weitere Merkmale, Vorteile und Einzelheiten der Erfindung ergeben sich aus der nachfolgenden Beschreibung eines Ausführungsbeispieles anhand der Zeichnung. Es zeigt
- Fig. 1: einen Backofen nach der Erfindung in teilweise aufgebrochener Explosions-Darstellung,
- Fig. 2: einen vertikalen Längsschnitt durch ein Heizmodul des Backofens in stark schematisierter Darstellung und
- Fig. 3: einen vertikalen Querschnitt durch den Backofen ebenfalls in stark schematisierter Darstellung.

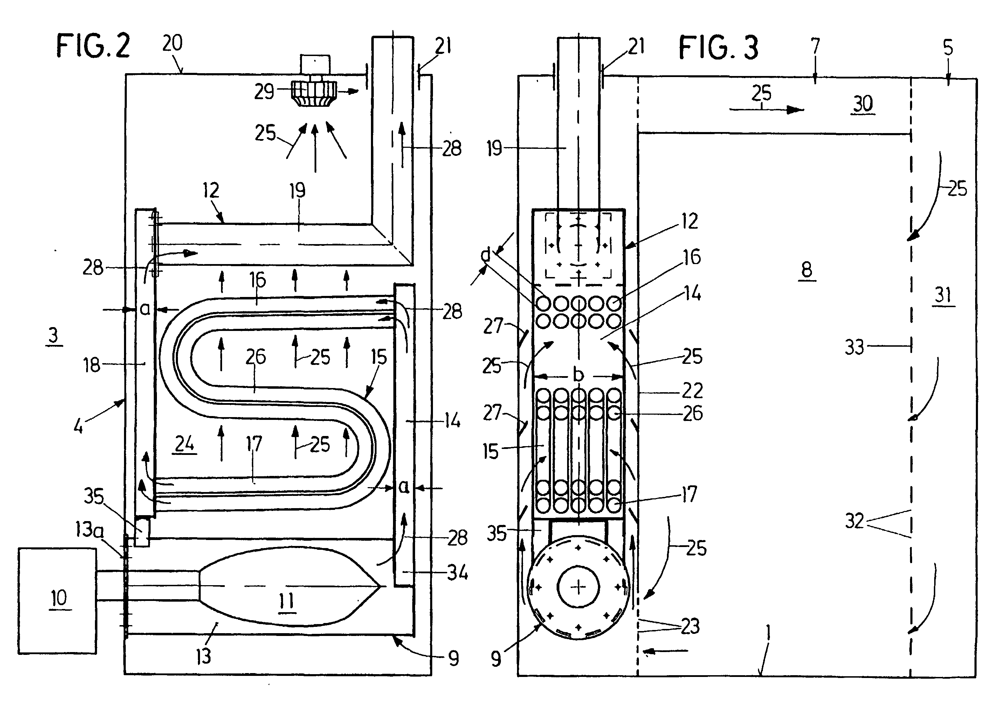

Der in der Zeichnung dargestellte Backofen ist ein Stikkenofen. Er ist aus selbständig transportfähigen Bauelementen aufgebaut, die gleichzeitig seine Seitenwände bilden. Auf einer Bodenplatte 1 ist ein um eine vertikale Drehachse drehbarer Drehteller drehantreibbar gelagert, auf den ein Stikkenwagen mit dem Backgut gestellt wird. Der Ofen weist weiterhin ein als - von der Vorderseite 3 her gesehen - linke Seitenwand dienendes Heizmodul 4 und ein - ebenfalls von der Vorderseite 3 her gesehen - als rechte Seitenwand dienendes Beschwadungsmodul 5 auf. Es ist weiterhin eine Rückwand 6 vorgesehen. Der Heizmodul 4 wird mit dem Beschwadungsmodul 5 über ein nur in Fig. 3 schematisch dargestelltes, als Deckplatte dienendes Heizkanalmodul 7 verbunden. Die vom Heizmodul 4, dem Beschwadungsmodul 5, der Rückwand 6, der Bodenplatte 1 und dem Heizkanalmodul 7 umgrenzte Backraum 8, in dem sich der Drehteller 2 befindet, wird zur Vorderseite 3 hin durch eine nicht dargestellte Fronttür verschlossen, die zum Ein- bzw. Ausfahren des Stikkenwagens geöffnet werden kann.

Im unteren Bereich des Heizmoduls 4 befindet sich ein Brennmodul 9, das eine Brennkammer 13 und einen Brenner 10 aufweist. Die Brennkammer 13 ist mittels Schrauben 13a im Bereich der Vorderseite 3, also benachbart zum Brenner 10, lösbar am Heizmodul 4 befestigt. Die vom Brenner 10 erzeugten heißen Rauchgase 11, die in Fig. 2 durch eine Flamme angedeutet sind, werden durch einen Kreuz-Gegen-Strom-Wärmetauscher 12 geleitet, in dem sie die in ihnen enthaltene Wärme weitgehend an die zum Backen eingesetzte Umluft abgeben.

An die horizontal gelagerte Brennkammer 13 des Brennermoduls 9 schließt sich - an deren dem Brenner 10 abgewandten Ende - ein kastenförmig ausgebildeter Rauchgas-Zuführkanal 14 an, an dessen unterem, also der Brennkammer 13 abgewandten Ende ein Bündel S-förmig ausgebildeter Wärmeübertragungsrohre 15 angebracht ist. Die Wärmeübertragungsrohre 15 sind jeweils mit ihrem oberen, horizontal verlaufenden Schenkel 16 an dem Zuführkanal 14 durch Schweißen befestigt und sind mit dessen Innenraum verbunden. Die jeweils einstückigen Wärmeübertragungsrohre 15 sind nach unten geführt, wobei ihr jeweils unterer, ebenfalls horizontal verlaufender Schenkel 17 an einem ebenfalls kastenförmigen Rauchgas-Abführkanal 18 durch Anschweißen angeschlossen und mit dessen Innenraum verbunden ist. Der Rauchgas-Abführkanal 18 ist vertikal nach oben bis über die oberen Schenkel 16 der Wärmeübertragungsrohre 15 geführt, wo aus ihm ein Rauchgasrohr 19 herausgeführt ist, das durch die Oberseite 20 des Heizmoduls 4 herausgeführt ist, wo es in einem Schiebelager 21 vertikal frei verschiebbar geführt ist.

Unmittelbar oberhalb der Bodenplatte 1 sind in der das Heizmodul 4 zum Backraum 8 hin begrenzenden Backraumwand 22 Lufteintritts-Öffnungen 23 ausgebildet, durch die die zum Heizen dienende Umluft vom Backraum 8 in den im Heizmodul 4 ausgebildeten Umluft-Heizraum 24 eintreten kann. Diese Umluft wird entsprechend den Umluft-Strömungsrichtungspfeilen 25 um die Brennkammer 13 herum durch den Wärmetauscher 12 geführt, wobei die Umluft die unteren Schenkel 17, die mittleren Schenkel 26 und die oberen Schenkel 16 der S-förmigen Wärmeübertragungsrohre 15 quer, also im Kreuzstrom, anströmt. Damit die Umluft durch das Bündel von Wärmeübertragungsrohren 15 geführt wird, können zusätzlich Leitbleche 27 im Umluft-Heizraum 24 vorgesehen sein.

Die im Brennermodul 9 erzeugten Rauchgase 11 strömen entsprechend den Rauchgas-Strömungsrichtungspfeilen 28 von der Brennkammer 13 in den Rauchgas-Zuführkanal 14, in diesem nach oben und dort in die oberen Schenkel 16 der Wärmeübertragungsrohre 15. In diesen strömen sie durch die oberen Schenkel 16, die mittleren Schenkel 26 und die unteren Schenkel 17 jeweils quer zur Umluft, insgesamt aber dieser nach unten entgegen. Die Rauchgase 11 treten dann benachbart zur Brennkammer 13 in den Rauchgas-Abführkanal 18 ein und strömen in diesem nach oben und dann durch das Rauchgasrohr 19 in einen nicht dargestellten Kamin.

Die Umluft wird durch ein in der Oberseite 20 des Heizmoduls 4 angeordnetes Umluft-Gebläse 29 aus dem Backraum 8 in den Heizraum 24 gesaugt und durch die im Heizkanalmodul 7 ausgebildeten Kanäle 30 in Zuführkanäle 31 im Beschwadungsmodul 5 gedrückt. Aus diesen Zuführkanälen 31 tritt die erhitzte Umluft 31 großflächig durch Luftaustritts-Öffnungen 32 in den Backraum 8 ein. Diese Luftaustritts-Öffnungen 32 sind in der den Backraum 8 begrenzenden Backraumwand 33 des Beschwadungsmoduls 5 ausgebildet. Nach Durchströmen des Backraums 8 und entsprechender Wärmeabgabe an das dort befindliche Backgut strömt die Umluft in der bereits geschilderten Weise durch die Lufteintritts-Öffnungen 23 in den Umluft-Heizraum 24 des Heizmoduls 4 wieder ein.

Der aus dem Rauchgas-Zuführkanal 14, den Wärmeübertragungsrohren 15, dem Rauchgas-Abführkanal 18 und dem Rauchgasrohr 19 bestehende Kreuz-Gegen-Strom-Wärmetauscher 12 ist nur an einer Stelle ortsfest gehalten, so daß er sich frei in allen Koordinatenrichtungen ausdehnen kann. Diese eine Befestigungsstelle 34 befindet sich am Übergang von der Brennkammer 13 in den Rauchgas-Zuführkanal 14. Der Rauchgas-Abführkanal 18 ist durch eine Schiebe-Abstützung 35 in Richtung der Brennkammer 13 auf dieser verschiebbar abgestützt. Das Rauchgasrohr 19 ist über das Schiebelager 21 vertikal frei verschiebbar. Aus den geschilderten Gründen kann der Wärmetauscher 12 sich frei in allen drei Koordinatenrichtungen ausdehnen. Durch die S-förmige Ausgestaltung der Wärmeübertragungsrohre 15 sind diese gleichsam federnd, wodurch unterschiedliche Wärmedehnungen, die im Wärmetauscher 12 selber auftreten, durch elastische Verformung kompensiert werden können. Da die Wärmeübertragungsrohre 15 jeweils nur an ihren Enden durch Schweißverbindungen mit dem Zuführkanal 14 bzw. dem Abführkanal 18 verbunden sind, ist der Fertigungs- und Prüfaufwand gering; darüber hinaus können durch die elastische Ausgestaltung des Wärmetauschers 12 und dessen freie Verschiebbarkeit in allen Koordinatenrichtungen keine Schweißnaht-Brüche auftreten.

Der Druckverlust in den S-förmig gekrümmten Wärmeübertragungsrohren 15 ist gering. Die Bauweise ist außerordentlich kompakt.

Wie den Fig. 2 und 3 entnehmbar ist, ist die Summe der Innen-Querschnitte aller Wärmeübertragungsrohre 15 einerseits und des Rauchgas-Zuführkanals 14 bzw. des Rauchgas-Abführkanals 18 etwa gleich, so daß im Weg des Rauchgases keine Querschnittsveränderungen auftreten, die zu Druckverlusten des Rauchgases führen würden. Der Gesamt-Innen-Querschnitt der Wärmeübertragungsrohre 15 wird durch deren Zahl z und deren Innendurchmesser d bestimmt. Der Innen-Querschnitt des Zuführkanals 14 und des Abführkanals 18 wird durch deren Breite a und deren Tiefe b bestimmt, wobei der Einfachheit halber im vorliegenden Fall davon ausgegangen wird, daß diese Maße für den Zuführkanal 14 einerseits und dem Abführkanal 18 andererseits gleich sind. Es gilt also z x d² x π/4 ≈ a x b.

Selbstverständlich sind die den Backofen nach außen begrenzenden Module bzw. Wandteile mit einer Wärmeisolation versehen, wie es allgemein üblich ist, die aber der Übersichtlichkeit halber nicht dargestellt ist.

## Patentansprüche

1. Backofen,
- mit einem Backraum (8),
- mit einer Umluft-Heizung, die
-- einen Brenner (10) mit Brennkammer (13) und
-- einen der Brennkammer (13) nachgeordneten Wärmetauscher (12) im Umluftweg
aufweist
**dadurch gekennzeichnet,**
**daß** der Wärmetauscher (12) als Kreuz-Gegen-Strom-Wärmetauscher (12) mit schlangenförmig gebogenen Wärmeübertragungs-Rohren (15) ausgebildet ist, die einerseits mit einem mit der Brennkammer (13) verbundenen Rauchgas-Zuführkanal (14) und andererseits mit einem Rauchgas-Abführkanal (18) verbunden sind.

2. Backofen nach Anspruch 1, **dadurch gekennzeichnet,**
**daß** der im wesentlichen aus dem Rauchgas-Zuführkanal (14), den Wärmeübertragungs-Rohren (15) und dem Rauchgas-Abführkanal (18) bestehende Kreuz-Gegen-Strom-Wärmetauscher (12) in jeder Koordinatenrichtung nur an einer Befestigungsstelle (34) festgelegt ist.

3. Backofen nach Anspruch 2, **dadurch gekennzeichnet,**
**daß** der Kreuz-Gegen-Strom-Wärmetauscher (12) nur an einer Befestigungsstelle (34) festgelegt ist.

4. Backofen nach einem der Ansprüche 1 bis 3, **dadurch gekennzeichnet, daß** die Wärmeübertragungsrohre (15) eng beieinander mit dem Rauchgas-Zuführkanal (14) oder dem Rauchgas-Abführkanal (18) verbunden sind.

5. Backofen nach Anspruch 2 oder 3, **dadurch gekennzeichnet,**
**daß** der Kreuz-Gegen-Strom-Wärmetauscher (12) über mindestens ein Schiebelager (21, 35) zusätzlich abgestützt ist.

6. Backofen nach einem der Ansprüche 1 bis 5, **dadurch gekennzeichnet, daß** die Wärmeübertragungsrohre (15) jeweils einstückig ausgebildet sind.

7. Backofen nach einem der Ansprüche 1 bis 6, **dadurch gekennzeichnet, daß** die Wärmeübertragungsrohre (15) S-förmig gebogen sind.

8. Backofen nach einem der Ansprüche 1 bis 7, **dadurch gekennzeichnet, daß** der Rauchgas-Zuführkanal (14) und/oder der Rauchgas-Abführkanal (18) jeweils kastenförmig ausgebildet sind.

9. Backofen nach einem der Ansprüche 1 bis 8, **dadurch gekennzeichnet, daß** die Summe der Innen-Querschnitte der Wärmeübertragungsrohre (15) etwa gleich den jeweiligen Innen-Querschnitten von Rauchgas-Zuführkanal (14) und Rauchgas-Abführkanal (18) ist.

10. Backofen nach einem der Ansprüche 1 bis 7, **dadurch gekennzeichnet, daß** aus dem Rauchgas-Abführkanal (14) ein Rauchgasrohr (19) ausmündet.

## Claims

1. A baking oven, comprising
- a baking chamber (8),
- a re-circulation air heater which comprises
-- a burner (10) with a combustion chamber (13), and
-- a heat exchanger (12) disposed downstream of the combustion chamber (13) in the way of the re-circulation air,
**characterized**
**in that** the heat exchanger (12) is a cross-counterflow heat exchanger (12) having serpentine heat transfer tubes (15) which, on the one hand, are connected to a flue gas supply channel (14) connected to the combustion chamber (13) and, on the other hand, to a flue gas discharge channel (18).

2. A baking oven according to claim 1, **characterized**
**in that** the cross-counterflow heat exchanger (12), which substantially comprises the flue gas supply channel (14), the heat transfer tubes (15) and the flue gas discharge channel (18), is fixed only at one fixing spot (34) in each coordinate direction of a Cartesian coordinate system.

3. A baking oven according to claim 2, **characterized**
**in that** the cross-counterflow heat exchanger (12) is fixed only at one fixing spot (34).

4. A baking oven according to one of claims 1 to 3, **characterized**
**in that** the heat transfer tubes (15), close to each other, are connected to the flue gas supply channel (14) or the flue gas discharge channel (18).

5. A baking oven according to claim 2 or 3, **characterized**
**in that** the cross-counterflow heat exchanger (12) is additionally supported by at least one slide bearing (21, 35).

6. A baking oven according to one of claims 1 to 5, **characterized**
**in that** each of the heat transfer tubes (15) is of one-piece design.

7. A baking oven according to one of claims 1 to 6, **characterized**
**in that** the heat transfer tubes (15) are curved in the shape of an S.

8. A baking oven according to one of claims 1 to 7, **characterized**
**in that** the flue gas supply channel (14) and/or the flue gas discharge channel (18) are of box-type design.

9. A baking oven according to one of claims 1 to 8, **characterized**
**in that** the sum of the inside cross-sections of the heat transfer tubes (15) is approximately equal to the respective inside cross-sections of the flue gas supply channel (14) and the flue gas discharge channel (18).

10. A baking oven according to one of claims 1 to 7, **characterized**
**in that** a flue gas tube (19) discharges from the flue gas discharge channel (14).

## Revendications

1. Four de cuisson, comportant
- une chambre de cuisson (8),
- un chauffage à circulation d'air qui comprend
-- un brûleur (10) avec une chambre de combustion (13) et
-- un échangeur de chaleur (12) disposé dans le trajet de circulation d'air en aval de la chambre de combustion (13),
**caractérisé en ce que**
l'échangeur de chaleur (12) est réalisé sous la forme d'un échangeur de chaleur à contre-courant croisé (12) comportant des tubes de transmission de chaleur (15) recourbés en forme de serpentin qui sont reliés d'une part à un canal d'alimentation de fumées (14) relié à la chambre de combustion (13) et d'autre part à un canal d'évacuation de fumées (18).

2. Four de cuisson selon la revendication 1, **caractérisé en ce que** l'échangeur de chaleur à contre-courant croisé (12), constitué essentiellement par le canal d'alimentation de fumées (14), par les tubes de transmission de chaleur (15) et par le canal d'évacuation de fumées (18), est fixé seulement à un emplacement de fixation (34) dans chaque direction des coordonnées.

3. Four de cuisson selon 1a revendication 2, **caractérisé en ce que** l'échangeur de chaleur à contre-courant croisé (12) est fixé seulement à un emplacement de fixation (34).

4. Four de cuisson selon l'une quelconque des revendications 1 à 3, **caractérisé en ce que** les tubes de transmission de chaleur (15) sont reliés étroitement les uns à côté des autres au canal d'alimentation de fumées (14) ou au canal d'évacuation de fumées (18).

5. Four de cuisson selon l'une ou l'autre des revendications 2 et 3, **caractérisé en ce que** l'échangeur de chaleur à contre-courant croisé (12) est soutenu en supplément via au moins un palier coulissant (21, 35).

6. Four de cuisson selon l'une quelconque des revendications 1 à 5, **caractérisé en ce que** les tubes de transmission de chaleur (15) sont réalisés chacun d'un seul tenant.

7. Four de cuisson selon l'une quelconque des revendications 1 à 6, **caractérisé en ce que** les tubes de transmission de chaleur (15) sont recourbés en forme de S.

8. Four de cuisson selon l'une quelconque des revendications 1 à 7, **caractérisé en ce que** le canal d'alimentation de fumées (14) et/ou le canal d'évacuation de fumées (18) sont réalisés chacun en forme de caisson.

9. Four de cuisson selon l'une quelconque des revendications 1 à 8, **caractérisé en ce que** la somme des sections intérieures des tubes de transmission de chaleur (15) est approximativement égale aux sections intérieures respectives du canal d'alimentation de fumées (14) et du canal d'évacuation de fumées (18).

10. Four de cuisson selon l'une quelconque des revendications 1 à 7, **caractérisé en ce qu'**un tube à fumées (19) débouche hors du canal d'évacuation de fumées (14).
